# EUROPÄISCHE PATENTSCHRIFT

(11) **EP 2 428 375 B1**
(45) Veröffentlichungstag und Bekanntmachung des Hinweises auf die Patenterteilung: **22.04.2015**
(21) Anmeldenummer: 11175718.3
(22) Anmeldetag: 28.07.2011
(51) Int. Cl.: B60G 21/055

(54) **Verfahren zur Herstellung eines Stabilisators sowie Stabilisator**
Method for manufacturing a stabiliser and stabiliser
Procédé de fabrication d'un stabilisateur et stabilisateur

(30) Priorität: 09.09.2010 DE 102010044798
(43) Veröffentlichungstag der Anmeldung: 14.03.2012
(73) Patentinhaber: Benteler Automobiltechnik GmbH, 33102 Paderborn (DE)
(72) Erfinder: Zuber, Armin, 33102 Paderborn (DE); Hammelmaier, Ullrich, 33104 Paderborn (DE); Saggel, Sebastian, 33098 Paderborn (DE)
(74) Vertreter: Ksoll, Peter

(56) Entgegenhaltungen:
- EP-A1- 1 731 337
- US-A1- 2003 111 817

## Beschreibung

Die Erfindung betrifft ein Verfahren zur Herstellung eines Stabilisators gemäß Patentanspruch 1 sowie einen Stabilisator hergestellt nach dem Verfahren.

Ein Stabilisator wird in Kraftfahrzeugen zur Verbesserung der Straßenlage eingesetzt. Als einzelne Fahrwerkskomponenten verbindender Torsionsstab reduziert der Stabilisator das Wanken der Karosserie bei Kurvenfahrten. Die zu einem Hebel abgewinkelten Endabschnitte des sonst parallel zur Achse angeordneten Stabilisators übertragen hierbei das Ein- und Ausfedern von einer Achsseite zur gegenüberliegenden Achsseite. Die einzelnen Komponenten stehen hierbei entweder direkt oder über einzelne Lenker im Wirkzusammenhang. Je nach Ausführung des Stabilisators kann das so erzeugte Fahrverhalten durch bauliche Auslegung oder über den Eingriff aktiver Komponenten beeinflusst werden.

Für die drehbare Festlegung des Stabilisators zwischen seinen Endabschnitten werden mit der tragenden Fahrzeugstruktur verbundene Drehlager eingesetzt. Diese sind zumeist als geschlitzte oder geteilte Gummi- oder Gummi-Metalllager an dem Stabilisator angeordnet, wo sie über geeignete Schellenelemente umgriffen und am Fahrzeug festgelegt sind.

Um ein axiales Verschieben des Stabilisators innerhalb der Drehlager zu vermeiden, werden geeignete Mittel zur Begrenzungen der Verschieblichkeit angeordnet. Dies können beispielsweise an dem Stabilisator angeordnete Begrenzungsringe sein, welche innerhalb oder neben dem jeweiligen Drehlager angeordnet sein.

Für die Anordnung und Ausführung dieser Begrenzungsringe sind im Stand der Technik verschiedene Konzepte bekannt. So kann der Begrenzungsring als geschlossener Metallring auf den eigentlichen Stabilisatorstab aufgefädelt und an geeigneter Stelle über dessen Verprägen festgelegt werden. Das Aufbringen und Positionieren des in sich geschlossenen Begrenzungsrings gestaltet sich insbesondere in abgewinkelten und mit Querschnittssprüngen versehenen Abschnitten des Stabilisatorkörpers mitunter schwierig. Überdies können die Endabschnitte des Stabilisatorkörpers erst nach dessen Aufbringung bearbeitet werden. Die notwendige Aufbringung des Begrenzungsrings vor Bearbeitung der Endabschnitte stört somit die weiteren Abläufe. Das mitunter notwendige Verfestigungsstrahlen des Stabilisatorkörpers im Bereich des festzulegenden Begrenzungsrings erhöht den Aufwand zusätzlich. Insgesamt ergibt sich so ein aufwendiges Handling bei der Fertigung, welches mit dem mehrfachen Verschieben des Begrenzungsrings auf dem Stabilisatorstab einhergeht.

Die EP 1 810 854 B1 offenbart ein Lagerelement für einen Stabilisator eines Kraftfahrzeugs. Hierbei wird ein Begrenzungsring an den Stabilisatorstab angeformt, beispielweise durch dessen Stauchen. Auf die Möglichkeit, diesen auch nachträglich anzuordnen und mit dem Stabilisatorstab fest zu verbinden, wird hingewiesen, allerdings keine nähere Ausführung hiierzu gemacht. Der so festgelegte Begrenzungsring dient als Kragen für aus dem Lagerelement ausgestellte Halbschalen, welche diesen umgreifen. Die Halbschalen werden im Anschluss über ein diese insgesamt umgreifendes Verbindungsmittel auf dem Kragen festgelegt.

Die DE 100 18 776 C1 beschreibt hierzu eine Lagerung für einen Stabilisator einer Radaufhängung für Kraftfahrzeuge. Hierfür wird ein Begrenzungsring aus einem Kunststoffmaterial auf den Stabilisatorstab aufgespritzt. Dieser kann auch aufgepresst sein. Der Begrenzungsring zeigt eine polygonale Außenform, weiche mit Teilen der ihn formschlüssig umgreifenden Lagerelemente in Eingriff steht. Das Aufbringen des Begrenzungsrings erfordert einen weiteren und aufwendigen Prozessschritt.

Die EP 0 900 677 A1beschreibt ebenfalls einen direkt auf den Stabilisator aufgebrachten Begrenzungsring, welcher aus einem gleitoptimierten Kunststoff besteht und eine ballige oder kugelförmige Außenkontur aufweist. Im eingebauten Zustand wird dieser dann vollständig von einem ihn umgebenden Lagerelemente drehbar umgriffen.

Aus der US 2003/0111817 A1 ist ein Stabilisator bekannt, welcher einen Stabilisatorstab und einen Begrenzungsring zur axialen Lagefixierung innerhalb einer Lagereinheit eines Kraftfahrzeugs aufweist. Der Begrenzungsring wird aus einem um den Stabilisatorstab geformten streifenförmigen Metallprofil gebildet, dessen Endabschnitte jeweils miteinander korrespondierende Ausnehmungen aufweisen, die jeweils miteinander verhakt sind.

Die bekannten Verfahren zur Aufbringung eines Begrenzungsrings auf einen Stabilisatorstab erfordern mitunter aufwendige Prozesse. Insbesondere vor dem Hintergrund, dass der Stabilisator eine ihn umgebende Beschichtung und weitere Bearbeitungen seiner Endabschnitte erhält, ist das Aufbringen des Begrenzungsrings nur innerhalb oder zwischen bestimmten Verfahrensschritten durchführbar. Hierdurch werden die nachfolgenden Prozessschritte entweder erschwert oder durch zusätzliche notwendige Maßnahmen im Aufwand erhöht. So lässt die nachträgliche Aufbringung des Begrenzungsrings auf den Stabilisatorstab noch Raum für Verbesserungen.

Der vorliegenden Erfindung liegt somit die Aufgabe zugrunde, ein Verfahren zur Herstellung eines Stabilisators sowie einen Stabilisator dahingehend zu verbessern, dass der an dem Stabilisatorstab zu fixierende Begrenzungsring ein höheres Aufnahmevermögen gegenüber Verschiebekräften besitzt.

Die Lösung des verfahrensmäßigen Teils der Aufgabe besteht nach der Erfindung in einem Verfahren zur Herstellung eines Stabilisators, welcher einen Stabilisatorstab und einen daran fixierten Begrenzungsring aufweist, gemäß den Merkmalen des Patentanspruchs 1.

Der gegenständliche Teil der Aufgabe wird durch einen Stabilisator gemäß den Merkmalen des Patentanspruchs 5 gelöst.

Für die Herstellung eines Stabilisators wird erfindungsgemäß zunächst ein streifenförmiges Metallprofil bereit gestellt. Das Metallprofil kann dabei bereits unterschiedliche Konturverläufe aufweisen, welche sowohl parallele Seiten als auch zueinander oder voneinander weg weisende Rundungen seiner Randbereiche erhält. Das Metallprofil kann auch unterschiedliche Dicken aufweisen, welche zu einseitigen oder beidseitigen Querschnittssprüngen innerhalb des streifenförmigen Verlaufs führen. Je nach Anwendung können auch Aussparungen, Ausstellungen sowie unterschiedliche Strukturierungen der Oberfläche vorhanden sein. Auch die Querschnittsform ist an die jeweilige Ausführungsform anpassbar, indem diese beispielsweise rechteckig, gebogen sowie aus einer Kombination daraus gebildet ist. In vorteilhafter Weise ist das Metallprofil dabei aus einem Blechstreifen abgelängt.

Das so bereitgestellte Metallprofil wird im Anschluss an seinen beiden Endabschnitten konfektioniert. Dies kann beispielsweise durch einen Umformprozess geschehen. In vorteilhafter Weise werden die Endabschnitte durch einen Materialabtrag, beispielsweise spanend oder fräsend, oder mittels Pressenkraft bearbeitet, wodurch sie jeweils eine Verschlusskontur erhalten. Grundsätzlich kann das benötigte Metallprofil auch durch Walzen eines Blechprofils mit anschließendem Ablängen erzeugt werden. Auch wenn die Verschlusskontur beispielsweise eine durchgehende Ausnehmung oder eine Ausstellung sein kann, weist diese bevorzugt jeweils eine Kombination aus einer Ausnehmung mit einer in Längsrichtung des Metallprofils ausgerichteten Hakenform auf. Je nach Ausführung kann die Verschlusskontur auch durch ein mit dem Metallprofil zu verbindendes Verschlusselement gebildet sein.

Das Metallprofil wird im Anschluss umgeformt. Das Konfektionieren der Endabschnitte kann dabei sowohl vor als auch nach sowie zusammen mit der Umformung des Metallprofils erfolgen. Durch die Umformung erhält das Metallprofil eine wellenförmige Konfiguration. Die Wellenform verläuft hierbei in Längsrichtung des Metallprofils so, dass die einzelnen Berge und Täler um jene Achse des Metallprofils herum gekrümmt sind, weiche das auf den Querschnitt bezogene geringere Widerstandsmoment aufweist (schwache Achse). Die schwache Achse erstreckt sich dabei in Richtung der Breite des Metallprofils, deren Abmessung die der Höhe des Metallprofils übersteigt.

Grundsätzlich richtet sich die Querschnittsgeometrie nach den jeweiligen Erfordernissen. Je nach benötigter Geometrie kann die radial gemessene Dicke des zu erstellenden Begrenzungsrings auch über dessen Breite liegen, so dass die einzelnen Berge und Täler um die entsprechend starke Achse des Metallprofils gekrümmt sind. Bei einem symmetrischen, beispielsweise quadratischen Querschnitt beschränkt sich die Wellenform dabei auf eine Ebene. Dabei erhält das Metallprofil mindestens einen Wellenabschnitt. Vorzugsweise ist die wellenförmige Konfiguration an eine gestreckte W-Form mit gebogenen Längen und gerundeten Übergängen angelehnt.

Das wellenförmige Metallprofil wird dann in ein geeignetes Werkzeug eingelegt. Das Werkzeug dient der Aufnahme des Metallprofils, wobei dieses zumindest bereichsweise von einer Seite aus mit Teilen des Werkzeugs in Kontakt steht. Das Werkzeug kann dabei eine durchgehende und das Werkzeug teilende Öffnung in Form eines Schlitzes aufweisen. Auch kann die Öffnung nur zum Teil das Werkzeug teilen, wobei der Schlitz an einer Randseite des Werkzeugs beginnt und diese öffnet. Grundsätzlich ist auch eine leichte Vertiefung von einer Randseite aus denkbar. Das Metallprofil wird in eine dafür vorgesehene Aufnahme eingelegt. Das Metallprofil erstreckt sich dabei in einer Querrichtung zur Öffnung.

Das Verfahren sieht vor, dass ein Stabilisatorstab bereitgestellt wird. Dieser kann beispielsweise bereits seine Endkontur erhalten haben. Auch die Endabschnitte des Stabilisatorstabs können bereits entsprechend ausgeformt sein. Der Stabilisatorstab kann somit bereits an seinen Enden geeignete Koppelstellen zu weiteren Fahrwerkskomponenten und/oder Lagern aufweisen. Je nach Ausführung kann der Stabilisatorstab sowohl bereits beschichtet als auch unbeschichtet sein.

Nach Einlegen des Metallprofils und Bereitstellen des Stabilisatorstabs wird dieser nun in das Werkzeug eingeführt. Vorzugsweise wird die längliche Ausgestaltung des Stabilisatorstabs dabei in die Öffnung des Werkzeugs eingelegt. Dabei wird der Bereich des Stabilisatorstabs auf das Metallprofil aufgelegt, welcher später mit einer Lagereinheit an der Fahrzeugstruktur befestigt wird. Der Stabilisatorstab wird in einer Querrichtung zum Metallprofil auf dieses aufgelegt. Dabei wird der Stabilisatorstab umfangsseitig gegen den Wellenabschnitt des im Werkzeug liegenden wellenförmigen Metallprofils gedrückt. Während des Drückvorgangs wird der Stabilisatorstab in seine Querrichtung auf das Metallprofil gedrückt, wodurch dieses durch eine entsprechende Gegenlagerung im Werkzeug um dieses zumindest teilweise herum gebogen wird.

Hierbei wird das Metallprofil in einigen Bereichen an den Stabilisator angeformt, wodurch der gedrückte Wellenabschnitt zumindest abschnittsweise abgestreckt wird und die abgestreckten Abschnitte in einen kraftschlüssigen Kontakt zum Stabilisatorstab gelangen. Um die notwendige Abstreckung zu erhalten, ist ein zwischen dem Werkzeug und dem eingelegten Stabilisatorstab gelegener Spalt angeordnet, weicher gegenüber einer in radialer Richtung gemessenen Dicke des Metallprofils definiert kleiner ist. Die Abstreckung selbst erfolgt in einzelnen Abschnitten des Metallprofils, weiche innerhalb des Werkzeugs gelegen sind. Bei der Abstreckung handelt es sich um eine zumindest abschnittsweise plastische Verformung des Metallprofils.

Im weiteren Verlauf wird das Metallprofil vollständig um den Stabilisatorstab umgelegt. Das Umlegen des Metallprofils kann während der Bewegung des Stabilisatorstabs erfolgen, indem dieser weiter durch das Werkzeug geführt wird. Grundsätzlich kann das Werkzeug hierfür auch eine geeignete Umlegeeinheit aufweisen, welche das Metallprofil um den im Werkzeug ruhenden Stabilisatorstab herum biegen. Denkbar ist auch ein umfangsseitiges Abrollen des Stabilisatorstabs auf dem Metallprofil, bei weichen das Metallprofil um den Stabilisatorstab umgelegt wird.

Danach werden die Endabschnitte des Metallprofils miteinander verbunden. Hierbei gelangen die an den Endabschnitten angeordneten Verschlusskonturen miteinander korrespondierend in Eingriff, wodurch der in sich geschlossene Begrenzungsring gebildet wird. Vorzugsweise werden die beiden Verschlusskonturen dabei ineinander verhakt. Die Verschlusskonturen gelangen dabei unter Ausbildung einer zueinander definierten Neigung in Eingriff.

Die seitens des Begrenzungsrings aufzunehmenden Verschiebekräfte werden insbesondere durch seine abgestreckten Bereiche auf den Stabilisatorstab übertragen. Hierbei weist der abgestreckte und somit plastisch verformte Abschnitt des Begrenzungsrings einen flächigen umfangsseitigen Kontakt zur Oberfläche des Stabilisatorstabs auf. Bedingt durch die Ausgestaltung der Verschlusskonturen weisen die miteinander verbundenen Endabschnitte im miteinander verhakten Zustand der Verschlusskonturen eine definierte Neigung zueinander auf. Hierfür wird vorzugsweise die im Begrenzungsring enthaltene Normalkraft aus der Ebene der umlaufenden Schwerachse des Metallprofils gebracht, indem die Verschlusskonturen eine definierte Schrägstellung ihrer zueinander in Eingriff stehenden Bereiche aufweist.

In einer Variante weisen die Verschlusskonturen eine miteinander in Eingriff gelangende Ausgestaltung auf, bei der die kraftschlüssig gegeneinander verspannten Bereiche außerhalb der Schwerachse liegen, so dass eine exzentrische Aufnahme der Normalkraft erfolgt. Die so erzeugte Querkraft weist dabei in Richtung der Längsachse des Stabilisatorstabs, so dass die Endabschnitte zumindest bereichsweise auf die Mantelfläche des Stabilisatorstabs gedrückt werden.

Durch die definierte Neigung entsteht ein Winkel zwischen einer im Kontaktbereich des Endabschnitts und dem Stabilisatorstab liegenden Tangente und dem dieser gegenüber geneigtem Endabschnitt. Durch diese Neigung werden die Endabschnitte umfangsseitig auf den Stabilisatorstab gepresst, um als Gegenlager zu den abgestreckten tragenden Bereichen des in sich geschlossenen Begrenzungsrings zu wirken. Die aufgrund des elastischen Anteils innerhalb des geschlossenen Begrenzungsrings erfolgende Rückfederung der Endabschnitte trägt dabei wesentlich zur Haltbarkeit der Verbindung bei.

Das vorgestellte Verfahren ermöglicht eine wirtschaftliche Möglichkeit zur Herstellung eines Stabilisators. Der an dem Stabilisatorstab zu fixierende Begrenzungsring kann hierdurch mit reduziertem Aufwand und ohne Störung der anschließenden Verfahrensprozesse aufgebracht werden. Auf diese Weise kann der Stabilisator zunächst weitestgehend ohne Einschränkungen bearbeitet werden, wobei der Begrenzungsring erst nach der Endenbearbeitung und dem gegebenenfalls notwendigen Verfestigungsstrahlen auf den Stabilisator gebracht wird.

Vorteilhafte Weiterbildungen des erfindungsgemäßen Verfahrens sind Inhalt der abhängigen Ansprüche 2 bis 4.

Dabei sieht die Erfindung vor, dass die zwischen dem Wellenabschnitt und den Endabschnitten gelegenen Teile des Metallprofils noch vor dem Verbinden der Endabschnitte um den Stabilisatorkörper geformt werden. Durch die wellenförmige Konfiguration des Metallprofils liegt dieses während seines Umformens um den Stabilisatorstab nur bereichsweise an dessen Umfang an. Insbesondere die als Berge konfigurierten Abschnitte des Metallprofils sind dabei zunächst zumindest teilweise vom Umfang des Stabilisatorstabs beabstandet.

Gegenüber einem geraden Verlauf ist die wellenförmig gebogene Umfangslänge des Metallprofils zudem zunächst verkürzt. Hierdurch liegen die sich nähernden Verschlusskonturen der Endabschnitte nicht unmittelbar während des Umlegevorgangs korrespondierend aneinander. Durch das Anformen der restlichen Bereiche des Metallprofils wird dieses weiter gestreckt, indem die einzelnen Wellen geglättet werden, wodurch das Metallprofil eng an dem Stabilisatorstab anliegt und die Verschlusskonturen besser zueinander gelangen. Über die zusätzliche Streckung des Metallprofils in dessen Längsrichtung schnürt sich dieses weiter ein, in dessen Folge der radiale Anpressdruck auf den Mantel des Stabilisatorstabs erhöht wird.

Bei Bedarf werden die beiden Endabschnitte nach dem Schließen des Begrenzungsrings im Bereich der Verschlusskonturen endgeformt. So werden die möglicherweise nur teilweise in Eingriff gelangten Verschlusskonturen in ihre angedachte Endlage gebracht und kraftschlüssig und/oder formschlüssig miteinander verbunden. Eine Ausführungsvariante, welche einen zu verprägenden Teilbereich der Endabschnitte beinhaltet, wird auf diese Weise endgültig miteinander verbunden. Denkbar wäre hierbei eine Ausstellung in Form eines Hammerkopfes, welche so in die korrespondierende Ausnehmung des gegenüberliegenden Endabschnitts eingedrückt wird. Durch das Endformen der Verschlusskonturen werden diese fest miteinander verankert. Die für eine haltbare Verbindung notwendige Rückfederung der Endabschnitte bleibt grundsätzlich erhalten.

Um eine nicht bestimmungsgemäßes Öffnen der Verbindung und somit des Begrenzungsrings zu verhindern, werden die Verschlusskonturen vor einem ungewollten Lösen ihres gegenseitigen Eingriffs gesichert. Die Sicherung kann beispielsweise stoffschlüssig oder über prägen sowie clinchen erfolgen. So kann die Verbindung möglicherweise durch eine Schweißung auf Dauer gesichert werden. Je nach Ausführung und Anforderung ist auch eine Klebung denkbar. Diese kann beispielsweise bereits bei der Konfektionierung der Endabschnitte vorbereitet werden, so dass die Sicherung der Verbindung bereits beim Schließen des Begrenzungsrings oder beim Endformen der Endabschnitte erfolgt. Die gewählte Sicherung kann dabei so ausgeführt sein, dass die für eine haltbare Verbindung notwendige Rückfederung innerhalb der Verbindung erhalten bleibt. Dies gilt insbesondere bei einer Klebung. Bei einer beispielsweise stoffschlüssigen Verbindung kann die sonst notwendige Rückfederung entfallen, da diese Verbindungsart zum Öffnen einer Zerstörung bedarf.

Gegenständlich schafft die Erfindung in konstruktiv einfacher und wirtschaftlicher Weise einen Stabilisator, mit einem auf dem Stabilisatorstab festgelegten Begrenzungsring, welcher der axialen Lagefixierung des Stabilisators innerhalb einer Lagereinheit eines Kraftfahrzeugs dient. Der Begrenzungsring ist aus einem um den Stabilisatorstab geformten streifenförmigen Metallprofil gebildet. Die Endabschnitte des Metallprofils weisen jeweils miteinander korrespondierende Ausnehmungen auf, die miteinander verhakt sind. Erfindungsgemäß besitzt der Begrenzungsring abgestreckte und somit plastisch verformte Abschnitte, welche einen flächigen, umfangsseitigen Kontakt zur Oberfläche ds Stabilisatorstabs aufweisen.

Die Ausnehmungen der Endabschnitte weisen bevorzugt in Längsrichtung des Metallstreifens weisende Haken auf, die im geschlossen Zustand des Begrenzungsrings ineinander greifen.

Durch die zuvor getrennte Ausführung des Begrenzungsrings als streifenförmiges Metallprofil kann dieser auch in Bereichen des Stabilisators angeordnet werden, die beispielsweise durch Querschnittssprünge und Aufweitungen kein Auffädeln eines bereits zu Beginn in sich geschlossenen Begrenzungsrings zulassen. Das Umlegen der Endabschnitte ist mit wenig Aufwand verbunden. Je nach Ausgestaltung des Montagewerkzeugs kann der Begrenzungsring sehr nah an andere Komponenten des Stabilisators anliegen, da keine aufwendigen Einrichtungen mit entsprechenden Ausmaßen notwendig sind. Die in sich verhakten Endabschnitte bieten bevorzugt eine Weiterführung der restlichen Geometrie des Metallprofils, so dass keine mitunter störenden Bereiche abstehen.

Vorteilhafte Ausgestaltungen des erfindungsgemäßen Stabilisators sind Gegenstand der abhängigen Ansprüche 6 und 7.

Hierbei ist vorgesehen, dass die miteinander korrespondierenden Ausnehmungen im miteinander verhakten Zustand eine definierte Neigung zueinander aufweisen. Die Neigung wird bevorzugt durch die Ausgestaltung der Verschlusskonturen erreicht. In vorteilhafter Weise wird hierbei die innerhalb des Begrenzungsrings vorhandene Normalkraft in Form einer Zugkraft innerhalb der Verschlusskonturen exzentrisch aufgenommen. Bedingt durch die Exzentrizität werden die beiden Endabschnitte des Begrenzungsrings geneigt und auf den Umfang des Stabilisatorstabs gepresst.

Die miteinander in Eingriff stehenden Ausnehmungen der Endabschnitte des Metallstreifens sind durch ein Fixiermittel miteinander verbunden. Das Fixiermittel kann beispielsweise eine stoffschlüssige Verbindung schaffen, wie sie durch eine Schweißung erreicht würde. Je nach Ausgestaltung ist auch ein stiftförmiges Verbindungsmittel denkbar, welches durch die Endabschnitte getrieben oder geschraubt wird. Mitunter kann das Fixiermittel auch ein gezielter Wärmeeintrag sein, in dessen Folge eine feste Verbindung der Endabschnitte untereinander entsteht. Überdies ist die Verbindung beispielsweise auch durch Clinchen oder Prägen zu realisieren, wobei auch eine Kombination aus dem zuvor Genannten denkbar ist. Grundsätzlich stellt die Auflistung der möglichen Fixiermittel allerdings keinerlei einschrankende Aufzahlung dar, sondern zeigt lediglich einen beispielhaften Auszug möglicher Ausgestaltungen eines Fixiermittels auf. Die durch die Neigung der Endabschnitte ermöglichte Rückfederung sollte insbesondere bei den Verbindungsarten beibehalten bleiben, weiche auch eine spätere Veränderung der Neigung zulassen. Die Rückfederung ist hierbei erforderlich, um auch innerhalb von beweglichen Verbindungsarten eine dauerhaft haltbare Verbindung zu schaffen.

Die vorliegende Erfindung ist nachfolgend anhand eines schematisch dargestellten Ausführungsbeispiels näher beschrieben. Es zeigen:
- Figur 1: einen Metallstreifen zur axialen Lagefixierung eines Stabilisators in einer ersten Seitenansicht;
- Figur 2: den Metallstreifen aus Figur 1 nach dessen wellenförmiger Umformung;
- Figur 3: der Metallstreifen aus Figur 1 aus 2 im Zusammenhang mit einem Stabilisatorstab;
- Figur 4: die in ein Werkzeug eingelegte Anordnung aus Figur 3 sowie
- Figur 5: das Umformergebnis der Figur 4 als erfindungsgemäßer Stabilisator.

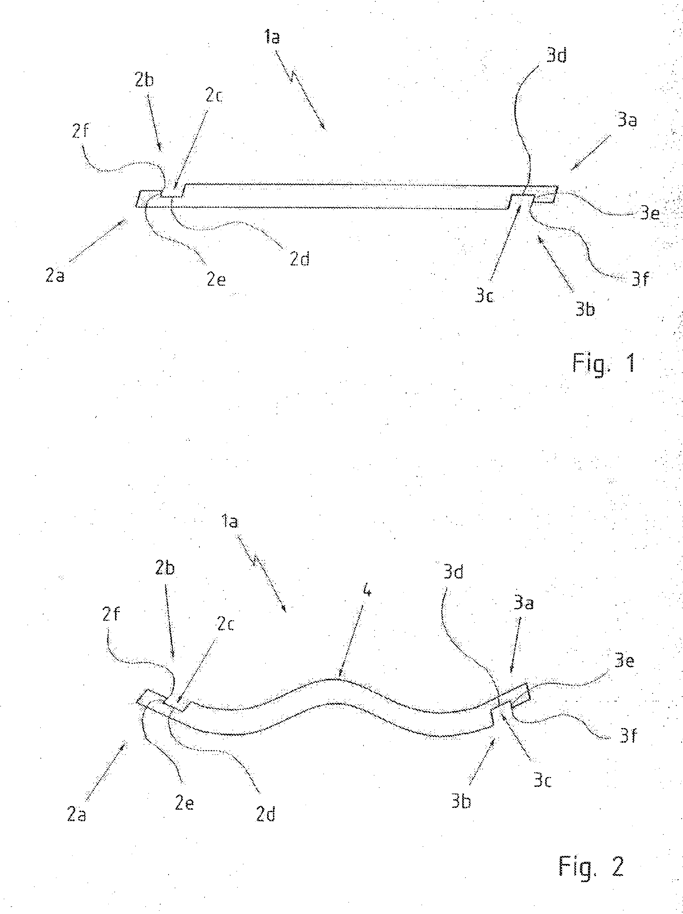

Figur 1 zeigt eine Seitenansicht eines streifenförmigen Metallprofils 1a. Dieses weist zwischen seinen beiden Endabschnitten 2a, 3a einen geradlinigen Verlauf auf. Die Endabschnitte 2a, 3a weisen jeweils eine Verschlusskontur 2b, 3b auf, wobei die Verschlusskontur 2b des Endabschnitts 2a eine Ausnehmung 2c ist. Dieser gegenüberliegend weist auch der Endabschnitt 3a eine Verschlusskontur 3b in Form einer Ausnehmung 3c auf. Die Verschlusskonturen 2b, 3b sind spiegelsymmetrisch um die Längsachse des Metallprofils 1a in die Endabschnitte 2a, 3a eingebracht, so dass die jeweiligen Ausnehmungen 2c, 3c jeweils zur gegenüberliegenden Seite des Metallprofils 1a weisen. Die Ausnehmungen 2c, 3c sind schräg in den Querschnitt des Metallprofils 1a eingebracht. Dadurch bildet die Ausnehmung 2c zwischen einem gegenüber den äußeren Abmessungen des Metallprofils 1a tiefer gelegenen Bereich 2d und einer schräg dazu verlaufenden Seitenwand 2e einen Haken 2f aus. Dem gegenüber bildet auch die Ausnehmung 3c zwischen einem gegenüber den äußeren Abmessungen des Metallprofil 1a tiefer gelegenen Bereich 3d und einer schräg dazu verlaufenden Seitewand 3e einen Haken 3f aus.

In einem nächsten Schritt wird das so konfektionierte Metallprofil 1a in eine wellenförmige Konfiguration umgeformt.

Figur 2 stellt das umgeformte Metallprofil 1a aus Figur 1 in der wellenförmigen Konfiguration dar. Das Metallprofil 1a weist hierbei eine im Wesentlichen flache W-Form auf. Eine mittlere Erhebung weist einen Wellenabschnitt 4 auf, welcher in sich sinusförmig gebogen ist. Die jeweiligen Richtungswechsel zwischen dem Wellenabschnitt 4 und den Endabschnitten 2a, 3a des Metallprofils 1a weisen gerundete Übergänge auf.

Als nächstes wird ein Stabilisatorstab 5 bereitgestellt.

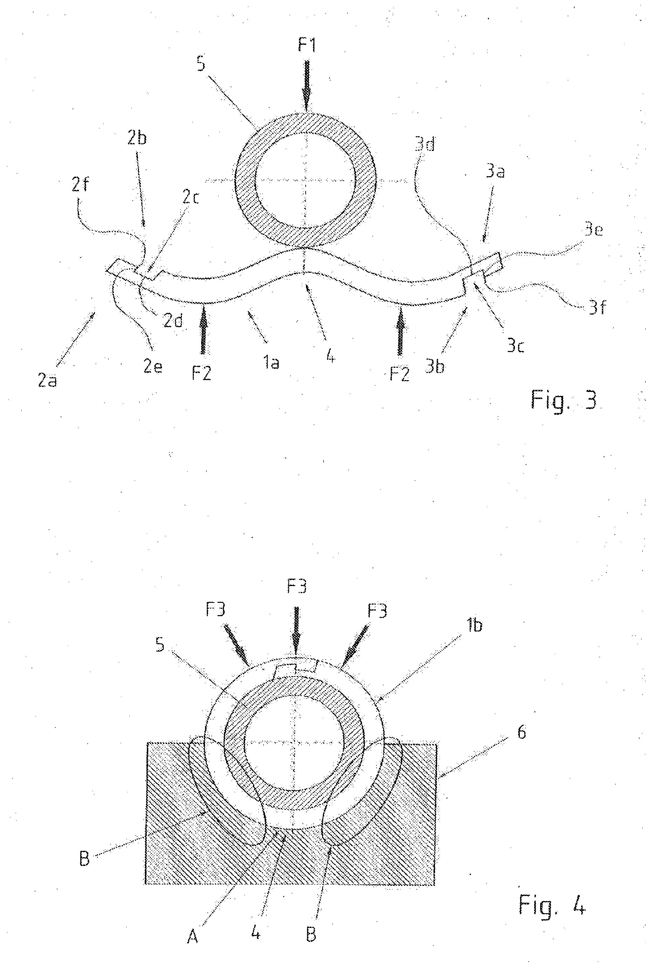

Figur 3 zeigt das wellenförmige Metallprofil 1a in Kombination mit dem Stabilisatorstab 5. Der Stabilisatorstab 5 ist mittig auf den Wellenabschnitt 4 des Metallprofils 1a aufgelegt. Der Stabilisatorstab 5 wird aus einem Rohr gebildet. Die Ausrichtung des Stabilisatorstabs 5 verläuft dabei quer zur Längsrichtung des Metallprofils 1a. Der Stabilisatorstab 5 wird mit einer Kraft F1 gegen den Wellenabschnitt 4 gedrückt, wodurch das Metallprofil 1a eine Gegenkraft F2 aufweist, die jeweils in den Bereichen des Metallprofils zwischen dem Wellenabschnitt 4 und den Endabschnitten 2a, 3a anliegt. Die Gegenkraft F2 resultiert hierbei aus einer Lage innerhalb eines nicht dargestellten Werkzeugs (siehe Figur 4).

Figur 4 zeigt ein Werkzeug 6, in welches das Metallprofil 1a zusammen mit dem Stabilisatorstab 5 eingelegt wurde. Das Werkzeug 6 zeigt eine halbkreisförmige Öffnung A. Der Stabilisatorstab 5 liegt hierbei mit einer Hälfte seines Querschnitts innerhalb des Werkzeugs 6. Das Metallprofil 1a ist hierbei um den Stabilisatorstab 5 herum geformt, wobei die Verschlusskonturen 2b, 3b miteinander korrespondierend in Eingriff stehen. Hierdurch bildet das Metallprofil 1a einen in sich geschlossenen Begrenzungsring 1b. In zwei Abschnitten B des Begrenzungsrings 1b im Kontaktbereich zum Werkzeug 6 ist der an den Stabilisatorstab 5 angedrückte Wellenabschnitt 4 zumindest abschnittsweise abgestreckt, wodurch die abgestreckten Abschnitte B in einen kraftschlüssigen Kontakt zum Stabilisatorstab 5 gelangen. Die abgestreckten Abschnitte B sind dabei plastisch verformt. Die Endabschnitte 2a, 3a werden im Bereich der Verschlusskonturen 2b, 3b mittels einer Kraft F3 endgeformt, wodurch sich ein fester Verschluss des Begrenzungsrings 1 b ergibt.

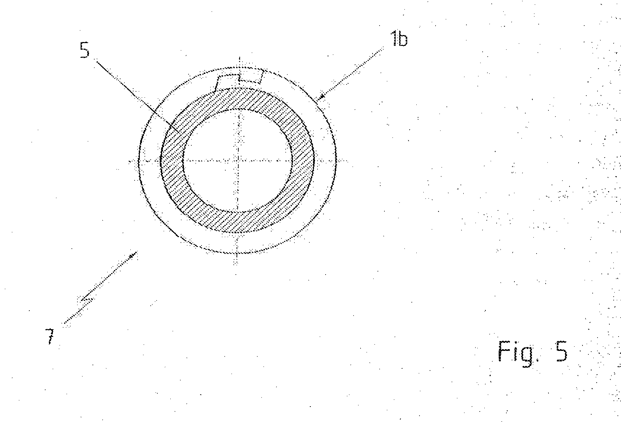

Figur 5 zeigt abschließend einen aus dem Werkzeug 6 entnommenen Stabilisator 7. Dieser wird aus dem Stabilisatorstab 5 und dem umfangsseitig um diesen herum gelegten Begrenzungsring 1b gebildet.

### Bezugszeichen:

- 1a -: Metallprofil
- 1b -: Begrenzungsring aus 1a
- 2a -: Endabschnitt von 1a
- 2b -: Verschlusskontur in 2a
- 2c -: Ausnehmung von 2b
- 2d -: Bereich von 2c
- 2e -: Seitenwand von 2c
- 2f -: Haken von 2c
- 3a -: Endabschnitt von 1 a
- 3b -: Verschlusskontur in 3a
- 3c -: Ausnehmung in 3b
- 3d -: Bereich von 3c
- 3e -: Seitenwand von 3c
- 3f -: Haken von 3c
- 4 -: Wellenabschnitt von 1a, 1b
- 5 -: Stabilisatorstab
- 6 -: Werkzeug
- 7 -: Stabilisator

- A -: Öffnung in 6
- B -: Abschnitt von 1 b
- F1 -: Kraft auf 5
- F2 -: Gegenkraft auf 1 a
- F3 -: Kraft auf 2a, 2b u. 3a, 3b

## Patentansprüche

1. Verfahren zur Herstellung eines Stabilisators (7), welcher einen Stabilisatorstab (5) und einen daran fixierten Begrenzungsring (1 b) aufweist, wobei der Begrenzungsring (1 b) zur axialen Lagefixierung des Stabilisators (7) in einer mit einem Kraftfahrzeug verbundenen Lagereinheit dient, umfassend folgende Schritte:
- Bereitstellen eines streifenförmigen Metallprofils (1a);
- Konfektionieren des Metallprofils (1a) an seinen Endabschnitten (2a, 3a), wodurch die Endabschnitte (2a, 3a) jeweils eine Verschlusskontur (2b, 3b) erhalten;
- Umformung des Metallprofils (1a) in eine wellenförmige Konfiguration, wobei das Metallprofil (1a) mindestens einen Wellenabschnitt (4) erhält;
- Einlegen des wellenförmigen Metallprofils (1a) in ein Werkzeug (6);
- Bereitstellen des Stabilisatorstabs (5);
- Einführen des Stabilisatorstabs (5) in das Werkzeug (6), wobei ein zwischen dem Werkzeug (6) und dem eingelegten Stabilisatorstab (5) gelegener Spalt gegenüber einer in radialer Richtung gemessenen Dicke des Metallprofils definiert kleiner ist und der Stabilisatorstab (5) umfangsseitig gegen den Wellenabschnitt (4) des im Werkzeug (6) liegenden wellenförmigen Metallprofils (1a) gedrückt wird:
- Anformen des Wellenabschnitts (4) an den Stabilisatorstab (5), wobei der Wellenabschnitt (4) zumindest abschnittsweise aufgrund des zwischen dem Werkzeug (6) und dem eingelegten Stabilisatorstab (5) gelegenen Spalts abgestreckt und somit plastisch verformt wird und die abgestreckten Abschnitte (B) in einen kraftschlüssigen weil flächigen umfangsseitigen Kontakt zur Oberfläche des Stabilisatorstabs (5) gelangen;
- Umlegen des Metallprofils (1a) um den Stabilisatorstab (5);
- Verbinden der Endabschnitte (2a, 3a) des Metallprofils (1a), wobei die Verschlusskonturen (2b, 3b) miteinander korrespondierend und unter Ausbildung einer definierten Neigung zueinander in Eingriff gelangen und der in sich geschlossene Begrenzungsring (1 b) gebildet wird.

2. Verfahren nach Anspruch 1, **dadurch gekennzeichnet, dass** vor dem Verbinden der Endabschnitte (2a, 3a) die zwischen dem Wellenabschnitt (4) und den Endabschnitten (2a, 3a) gelegenen Teile des Metallprofils (1a) um den Stabilisatorstab (5) geformt werden.

3. Verfahren nach Anspruch 1 oder 2, **dadurch gekennzeichnet, dass** die Endabschnitte (2a, 3a) im Bereich der Verschlusskonturen (2b, 3b) endgeformt werden

4. Verfahren nach einem der Ansprüche 1 bis 3, **dadurch gekennzeichnet, dass** die Verschlusskonturen (2b, 3b) vor einem Lösen ihres gegenseitigen Eingriffs gesichert werden.

## Claims

1. Method for producing a stabiliser (7) which comprises a stabiliser bar (5) and a stop ring (1 b) which is fixed thereon, the stop ring (1 b) being used to axially fix the stabiliser(7) in positionin a bearing unit which is connected to a motor vehicle; said method comprising the following steps:
- providing a strip-shaped metal profile (1a),
- finishingeach end portion (2a, 3a) of the metal profile (1a) so that the end portions (2a, 3a) are each provided with a closing contour (2b, 3b);
- shaping the metal profile (1a) in an undulating design, the metal profile (1 a) being provided with at least one undulating portion (4);
- inserting the undulating metal profile (1a) in a tool (6);
- providing the stabiliser bar (5);
- introducing the stabiliser bar (5) into the tool (6), a gap located between the tool (6) and the inserted stabiliser bar (5) being smaller than a thickness, which is measured in the radial direction, of the metal profile, and the stabiliser bar (5) being pressed against the periphery of the undulating portion (4) of the undulating metal profile (1a) which is located in the tool (6);
- moulding the undulating portion (4) to the stabiliser bar (5), the undulating portion (4)being ironed at least in portions as a result of the gap located between the tool (6) and the inserted stabiliser bar (5) and thus being plastically deformed, and the ironed portions (B) entering into extensive, peripheral and thus force-fit contact with the surface of the stabiliser bar (5);
- folding the metal profile (1a) around the stabiliser bar; and
- connecting the end portions (2a, 3a) of the metal profile (1 a), the closing contours (2b, 3b) corresponding to one another and entering into engagementbyforming a defined inclination to one another, andthe closed stop ring(1b) being formed.

2. Method according to claim 1, **characterised in that**, before connecting the end portions (2a, 3a), the portions of the metal profile (1 a) which are inserted between the undulating portion (4) and the end portions (2a, 3a) are shaped around the stabiliser bar (5).

3. Method according to either claim 1 or claim 2, **characterised in that** the end portions (2a, 3a) are shaped at the ends in the region of the closing contours (2b, 3b).

4. Method according to any of claims 1 to 3, **characterised in that** the closing contours (2b, 3b)are secured against loosening of their mutual engagement.

## Revendications

1. Procédé de fabrication d'un stabilisateur (7), qui présente une barre stabilisatrice (5) et un anneau limiteur (1b) qui lui est fixé, dans lequel l'anneau limiteur (1b) sert à la fixation de la position axiale du stabilisateur (7) dans une unité de support reliée à un véhicule à moteur, comprenant les étapes consistant à :
- préparer un profilé métallique en forme de bande (1a) ;
- élaborer le profilé métallique (1a) à ses sections d'extrémité (2a, 3a) afin que les sections d'extrémité (2a, 3a) présentent un contour de fermeture (2b, 3b) ;
- transformer le profilé métallique (1a) en configuration ondulée, où le profilé métallique (1a) comporte au moins une section d'ondulation (4) ;
- insérer le profilé métallique ondulé (1a) dans un outil (6) :
- préparer la barre stabilisatrice (5) ;
- mettre en place la barre stabilisatrice (5) dans l'outil (6), dans lequel un intervalle situé entre l'outil (6) et la barre stabilisatrice insérée (5) est défini plus petit que l'épaisseur du profilé métallique mesurée dans la direction radiale et la barre stabilisatrice (5) est pressée sur la périphérie contre la section d'ondulation (4) du profilé métallique ondulé (1a) se trouvant dans l'outil (6) ;
- élaborer la section d'ondulation (4) sur la barre stabilisatrice (5), dans lequel la section d'ondulation (4) est étirée au moins par sections en raison de l'intervalle présent entre l'outil (6) et la barre stabilisatrice insérée (5) et subit donc une déformation plastique et les sections étirées (B) viennent en contact mécanique sur la périphérie parce que disposées à plat vis-à-vis de la surface de la barre stabilisatrice (5) ;
- replier le profilé métallique (1a) autour de la barre stabilisatrice (5) ; et
- relier les sections d'extrémité (2a, 3a) du profilé métallique (1a), dans lequel les contours de fermeture (2b, 3b) viennent en prise l'une avec l'autre de manière correspondante et en formant une inclinaison définie et l'anneau limiteur refermé en soi (1b) est formé.

2. Procédé selon la revendication 1, **caractérisé en ce que**, avant la liaison des sections d'extrémité (2a, 3a), les parties du profilé métallique (1a) situées entre la section d'ondulation (4) et les sections d'extrémité (2a, 3a) sont mises en forme autour de la barre stabilisatrice (5).

3. Procédé selon la revendication 1 ou la revendication 2, **caractérisé en ce que** les sections d'extrémité (2a, 3a) sont finies dans la zone des contours de fermeture (2b, 3b).

4. Procédé selon l'une quelconque des revendications 1 à 3, **caractérisé en ce que** les contours de fermeture (2b, 3b) sont prémunis à l'encontre d'un désengagement de leur prise mutuelle.
